(19) **Europäisches Patentamt / European Patent Office / Office européen des brevets**

(11) **EP 4 676 039 A1**

(12) **EUROPEAN PATENT APPLICATION**

(43) Date of publication:
**07.01.2026 Bulletin 2026/02**

(21) Application number: **24306084.5**

(22) Date of filing: **02.07.2024**

(51) International Patent Classification (IPC):
*H04N 19/117* (2014.01)  *H04N 19/176* (2014.01)
*H04N 19/593* (2014.01)  *H04N 19/82* (2014.01)

(52) Cooperative Patent Classification (CPC):
**H04N 19/176; H04N 19/117; H04N 19/593; H04N 19/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **BORDES, Philippe**
  **35890 LAILLE (FR)**
• **LO BIANCO, Federico**
  **35700 RENNES (FR)**
• **LE PENDU, Mikael**
  **35700 RENNES (FR)**
• **NASER, Karam**
  **35250 MOUAZE (FR)**

(74) Representative: **Vossius & Partner
Patentanwälte Rechtsanwälte mbB
Siebertstraße 3
81675 München (DE)**

(54) **REGULARIZATION FOR DERIVING CONVOLUTIONAL MODELS FOR BLOCK PREDICTION**

(57) In one implementation, the encoder or decoder first obtains a first type and a second type of samples in a template area of a current block. From the first type of samples, the encoder or decoder obtains a matrix indicating autocorrelation of the first type of samples in the template area. The matrix is adjusted by a regularization matrix to form a regularized autocorrelation matrix, wherein non-zero elements of a diagonal of the regularization matrix are allowed to be different. The encoder or decoder obtains a vector indicating cross-correlation of the first type of samples and the second type of samples in the template area. Based on the regularized autocorrelation matrix and the cross-correlation vector, the encoder or decoder obtains a set of filter coefficients to be used to generate a prediction for a second type of samples in the current block based on a first type of samples.

FIG. 19

**Description**

TECHNICAL FIELD

The present embodiments generally relate to a method and an apparatus for deriving model parameters for block prediction in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to one embodiment, a method of video decoding is presented, comprising: obtaining a first type of samples and a second type of samples in a template area of a current block in a picture in a video; obtaining a matrix indicating autocorrelation of the first type of samples in the template area; adjusting the matrix by a regularization matrix to form a regularized autocorrelation matrix, wherein non-zero elements of a diagonal of the regularization matrix are allowed to be different; obtaining a vector indicating cross-correlation of the first type of samples and the second type of samples in the template area; obtaining a set of filter coefficients for a filter based on the regularized autocorrelation matrix and the vector; generating a prediction for the second type of samples in the current block based on the set of filter coefficients and the first type of samples; and decoding the current block based on the prediction.

According to another embodiment, a method of video encoding is presented, comprising: obtaining a first type of samples and a second type of samples in a template area of a current block in a picture in a video; obtaining a matrix indicating autocorrelation of the first type of samples in the template area; adjusting the matrix by a regularization matrix to form a regularized autocorrelation matrix, wherein non-zero elements of a diagonal of the regularization matrix are allowed to be different; obtaining a vector indicating cross-correlation of the first type of samples and the second type of samples in the template area; obtaining a set of filter coefficients for a filter based on the regularized autocorrelation matrix and the vector; generating a prediction for a second type of samples in the current block based on the set of filter coefficients and a first type of samples; and encoding the current block based on the prediction.

According to another embodiment, a signal is presented, comprising video data formatted by: obtaining a first type of samples and a second type of samples in a template area of a current block in a picture in a video; obtaining a matrix indicating autocorrelation of the first type of samples in the template area; adjusting the matrix by a regularization matrix to form a regularized autocorrelation matrix, wherein non-zero elements of a diagonal of the regularization matrix are allowed to be different; obtaining a vector indicating cross-correlation of the first type of samples and the second type of samples in the template area; obtaining a set of filter coefficients for a filter based on the regularized autocorrelation matrix and the vector; generating a prediction for a second type of samples in the current block based on the set of filter coefficients and a first type of samples; and encoding the current block based on the prediction.

According to another embodiment, an apparatus for video decoding is presented, comprising one or more processors and at least one memory coupled to the one or more processors, wherein the one or more processors are configured to: obtain a first type of samples and a second type of samples in a template area of a current block in a picture in a video; obtain a matrix indicating autocorrelation of the first type of samples in the template area; adjust the matrix by a regularization matrix to form a regularized autocorrelation matrix, wherein non-zero elements of a diagonal of the regularization matrix are allowed to be different; obtain a vector indicating cross-correlation of the first type of samples and the second type of samples in the template area; obtain a set of filter coefficients for a filter based on the regularized autocorrelation matrix and the vector; generate a prediction for a second type of samples in the current block based on the set of filter coefficients and a first type of samples; and decode the current block based on the prediction.

According to another embodiment, an apparatus for video encoding is presented, comprising one or more processors and at least one memory coupled to the one or more processors, wherein the one or more processors are configured to: obtain a first type of samples and a second type of samples in a template area of a current block in a picture in a video; obtain a matrix indicating autocorrelation of the first type of samples in the template area; adjust the matrix by a regularization matrix to form a regularized autocorrelation matrix, wherein non-zero elements of a diagonal of the regularization matrix are allowed to be different; obtain a vector indicating cross-correlation of the first type of samples and the second type of samples in the template area; obtain a set of filter coefficients for a filter based on the regularized autocorrelation matrix and the vector; generate a prediction for a second type of samples in the current block based on the set of filter coefficients and a first type of samples; and encode the current block based on the prediction.

In one embodiment, the regularization matrix contains non-zero non-diagonal elements.

In one embodiment, the regularization matrix is symmetric and positive semi-definite.

In one embodiment, a value of an element in the regularization matrix depends on a distance of a position of an input sample corresponding to the element to a center position. For example, a larger value is used for the element in the regularization matrix for a smaller distance to the center position.

In one embodiment, a value of an element in the regularization matrix depends on a type of a corresponding sample. For example, the type includes one or more of reconstructed luma samples, reconstructed luma samples but not center, gradient values, non-linear term, and bias.

In one embodiment, a value of an element in the regularization matrix depends on at least one of a block size of the current block and a size of the template area. For example, a smaller value is used for the element in the regularization matrix for a larger size of the template area.

In one embodiment, the filter is a convolutional filter.

In one embodiment, the prediction is generated based on a convolutional cross-component model, wherein the first type of samples corresponds to a luma component and the second type of samples corresponds to a chroma component.

In one embodiment, the prediction is generated based on extrapolation filter-based intra prediction, wherein the first type of samples corresponds to samples used as input to an extrapolation filter and the second type of samples corresponds to samples output from the extrapolation filter.

One or more embodiments also provide a computer program comprising instructions which when executed by one or more processors cause the one or more processors to perform the encoding method or decoding method according to any of the embodiments described herein. One or more of the present embodiments also provide a computer readable storage medium having stored thereon instructions for encoding or decoding video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

## BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates the reference area (with its paddings) used to derive the filter coefficients.

FIG. 5 illustrates the input luma samples used to derive the filter coefficients to predict one chroma sample.

FIG. 6 illustrates the spatial part of the convolutional filter.

FIG. 7 illustrates four Sobel based gradient patterns for GLM.

FIG. 8 illustrates non-downsampled luma samples.

FIG. 9 illustrates the reference area for BVG-CCCM.

FIG. 10 illustrates the spatial samples used for GL-CCCM.

FIG. 11 illustrates various down-sampling filters used in cross-component models.

FIG. 12 illustrates three EIP filter shapes.

FIG. 13 illustrates three types of reconstructed area for EIP filter.

FIG. 14 illustrates a process for building prediction with CCCM or EIP mode at the decoder, according to an embodiment.

FIGs. 15A and FIG. 15B illustrate examples of non-diagonal regularization matrix, according to an embodiment.

FIG. 16A illustrates EIP sample coefficients positions, and FIG. 16B illustrates an example of diagonal regularization matrix with different weights depending on relative positions of the filter samples, according to an embodiment.

FIGs. 17A, 17B and 17C illustrate that coefficients of same type share same value in the regularization matrix, according to an embodiment.

FIG. 18 illustrates a process for building prediction with CCCM or EIP mode at the encoder, according to an embodiment.

FIG. 19 illustrates a process for encoding or decoding a block based on convolutional prediction models, according to an embodiment.

DETAILED DESCRIPTION

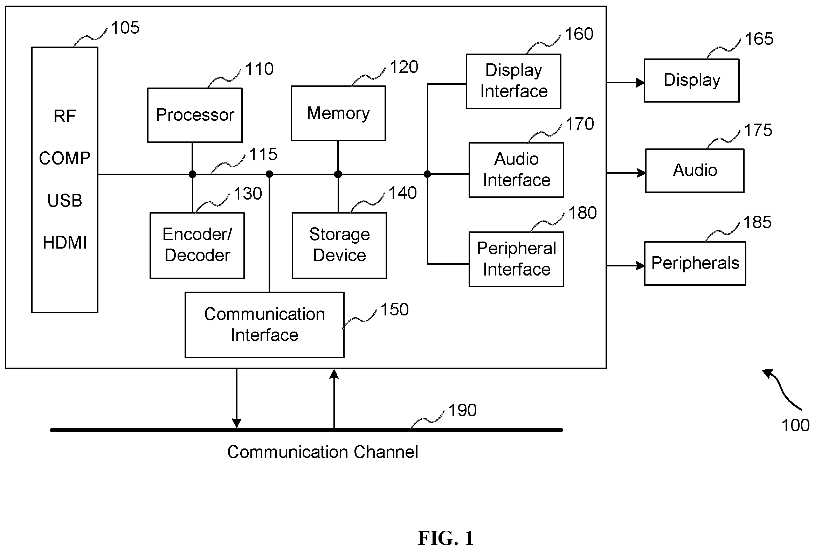

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

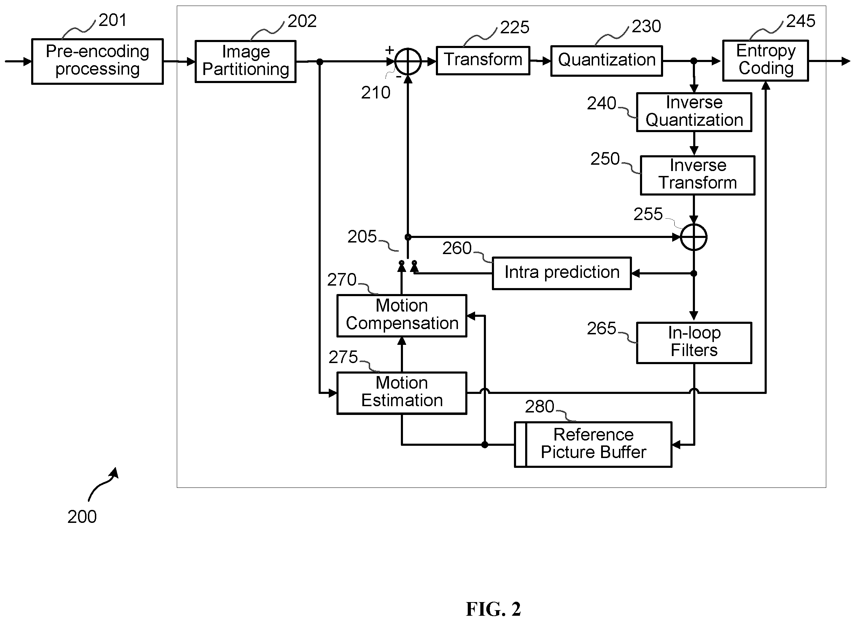

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

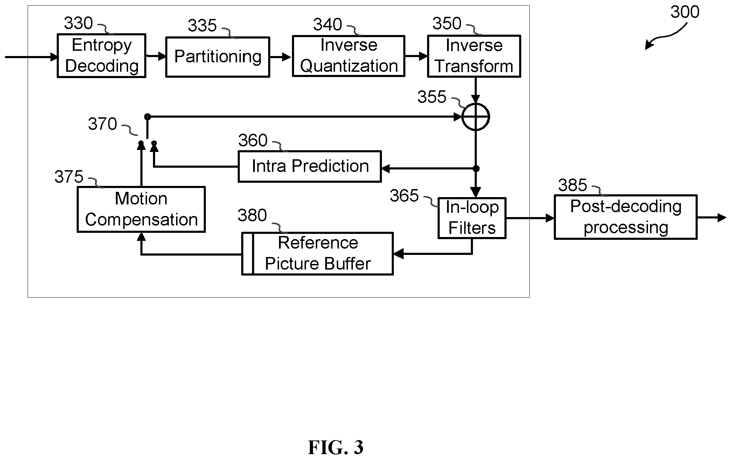

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

**Cross-component linear model (CCLM) for intra prediction**

To reduce the cross-component redundancy, a Cross-Component Linear Model (CCLM) prediction mode is used in the VVC, for which the chroma samples are predicted based on the reconstructed luma samples of the same CU by using a linear model as follows:

$$\mathrm{pred}_C(i, j) = \alpha \cdot \mathrm{rec}_L(i, j) + \beta$$

where $\mathrm{pred}_C(i, j)$ represents the predicted chroma samples in a CU and $\mathrm{rec}_L(i, j)$ represents the down-sampled reconstructed luma samples of the same CU. In VVC, the CCLM parameters ($\alpha$ and $\beta$) are derived with at most four neighboring chroma samples and their corresponding down-sampled luma samples. The CCLM mode to be used is coded per CU.

CCCM (Convolutional Cross-Component Model)

The convolutional cross-component model (CCCM) allows predicting chroma samples from reconstructed luma samples. The reconstructed luma samples are down-sampled to match the lower resolution chroma grid when chroma sub-sampling is used. Top, left, or top and left reference samples are used as templates for model derivation.

There is an option of using a single model or multi-model variant of CCCM. The multi-model variant uses two models, one model derived for samples above the average luma reference value and another model for the rest of the samples. Multi-model CCCM mode can be selected for PUs (Prediction Units) which have at least 128 reference samples available.

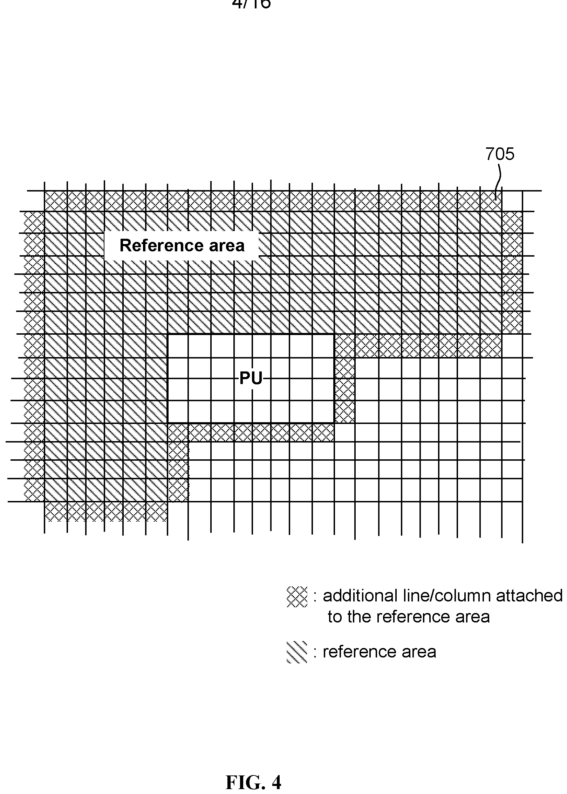

The filter coefficients ci of the model are calculated by minimizing MSE (Mean Squared Error) between predicted and reconstructed chroma samples in the reference (template) area. FIG. 4 illustrates an example of the reference area which consists of one or several lines of chroma samples above and left of the PU. Similarly, for the multi-model CCCM mode, the two candidates use luma samples collocated to the current chroma block to derive mean values which separate samples into two groups. The cost is derived by applying the candidate CCP (Cross-Component Prediction) on a template, calculating the sum of absolute difference (SAD) between CCP predicted samples and reconstructed samples in the template.

The MSE minimization is performed by calculating an autocorrelation matrix for the luma input and a cross-correlation vector between the luma input and chroma output. The matrix is inverted to derive the coefficient values ci.

In CCCM, the model coefficients are computed as solving a system of linear equations by Gaussian elimination:

$$\mathbf{A}^\top y = (\mathbf{A}^\top \mathbf{A})\widehat{x} \qquad (1a)$$

With the solution to the model coefficients *x* being

$$\widehat{x} = (\mathbf{A}^\top \mathbf{A})^{-1}\mathbf{A}^\top y \qquad (1b)$$

Several methods have been proposed to invert the matrix. The autocorrelation matrix can be LDL decomposed and the final filter coefficients are calculated using back-substitution. The process follows roughly the calculation of the ALF filter coefficients in ECM (Enhanced Compression Model), however, LDL decomposition was chosen instead of Cholesky decomposition to avoid using square root operations.

The autocorrelation matrix is calculated using the reconstructed values of luma samples in the template area. These samples are full range (e.g., between 0 and 1023 for 10-bit content) resulting in relatively large values in the autocorrelation matrix. This requires high bit depth operation during calculation of the model parameters. Then it has been proposed to remove fixed offsets from luma and chroma samples in each PU for each model. This drives down the magnitudes of the values used in the model creation and allows reducing the precision needed for the fixed-point arithmetic. As a result, 16-bit decimal precision is proposed to be used instead of the 22-bit precision of the original CCCM implementation.

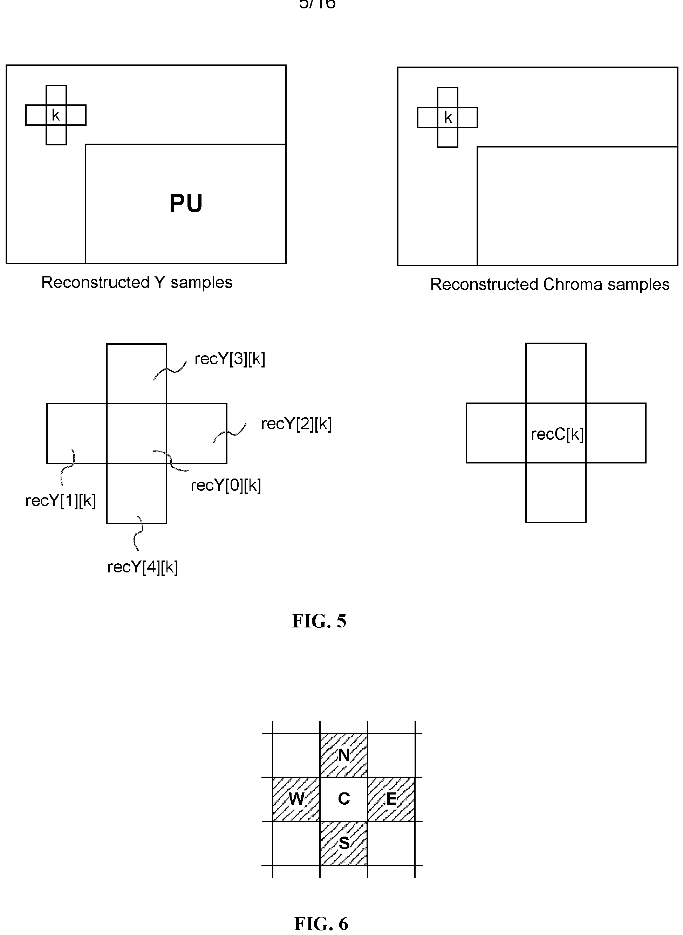

For example, denote M = A$^T$A = [$m_{i,j}$] as the autocorrelation matrix and D = A$^T$y = [$d_i$] as the cross-correlation vector. Denote recY[i][k] as the i$^{th}$ input of the k$^{th}$ set of reconstructed luma samples in the reference area to predict the k$^{th}$ target chroma sample recC[k], as illustrated in an example in FIG. 5. The matrix coefficients are set as follows, where N is the number of reconstructed chroma samples in the template:

$$m_{i,j} = \sum_{k=0}^{N} recY[i][k] \times recY[j][k]$$

$$d_i = \sum_{k=0}^{N} recY[i][k] \times recC[k]$$

One may select the model used for CCCM, for example, as described below.

## Convolutional filter

The convolutional 7-tap filter consist of a 5-tap plus sign shape spatial component, a nonlinear term and a bias term. The input to the spatial 5-tap component of the filter consists of a center (C) luma sample which is collocated with the chroma sample to be predicted and its above/north (N), below/south (S), left/west (W) and right/east (E) neighbors as illustrated in FIG. 6. The nonlinear term P is represented as the square of the center luma sample C and scaled to the sample value range of the content:

$$P = ( C*C + midVal ) >> bitDepth$$

That is, for 10-bit content it is calculated as:

$$P = ( C*C + 512 ) >> 10$$

The bias term B represents a scalar offset between the input and output (similarly to the offset term in CCLM) and is set to middle chroma value midVal (512 for 10-bit content).
Output of the filter is calculated as a convolution between the filter coefficients ci and the input values and clipped to the range of valid chroma samples:

$$predChromaVal = c0\ C + c1\ N + c2\ S + c3\ E + c4\ W + c5\ P + c6\ B \qquad (2)$$

## Gradient linear model (GLM)

For YUV 4:2:0 color format, a gradient linear model (GLM) method can be used to predict the chroma samples from luma sample gradients. Two modes are supported: a two-parameter GLM mode and a three-parameter GLM mode.
Compared with the CCLM, instead of down-sampled luma values, the two-parameter GLM utilizes luma sample gradients to derive the linear model. Specifically, when the two-parameter GLM is applied, the input to the CCLM process, i.e., the down-sampled luma samples L, are replaced by luma sample gradients G. The other parts of the CCLM (e.g., parameter derivation, prediction sample linear transform) are kept unchanged.

$$C = \alpha \cdot G + \beta \qquad (3a)$$

In the three-parameter GLM, a chroma sample can be predicted based on both the luma sample gradients and down-sampled luma values with different parameters. The model parameters of the three-parameter GLM are derived from six rows and columns adjacent samples by the LDL decomposition based MSE minimization method as used in the CCCM.

$$C = \alpha_0 \cdot G + \alpha_1 \cdot L + \alpha_2 \cdot \beta \qquad (3b)$$

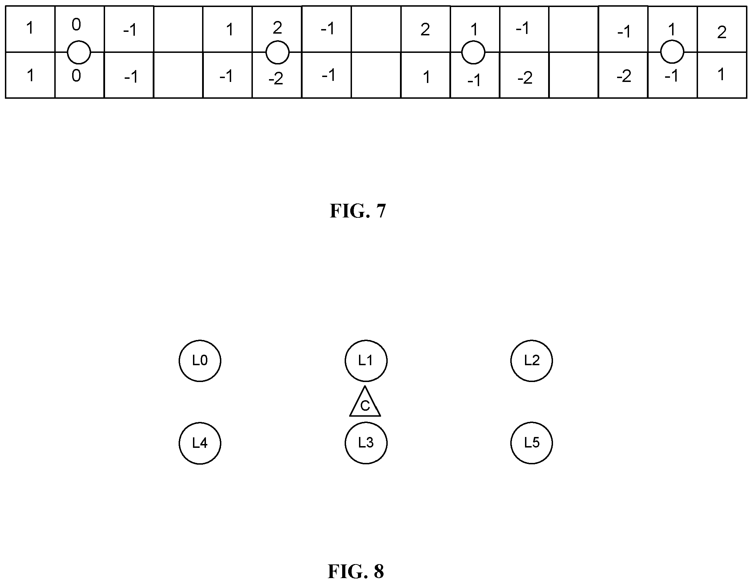

For signaling, when the CCLM mode is enabled for the current CU, one flag is signaled to indicate whether GLM is enabled for both Cb and Cr components; if the GLM is enabled, another flag is signaled to indicate which of the two GLM modes is selected and one syntax element is further signaled to select one of four gradient filters for the gradient calculation.
Four gradient filters are available for the GLM, as illustrated in FIG. 7.

## CCCM using non-downsampled luma samples

CCCM mode with 3x2 filter using non-downsampled luma samples is used, which consists of 6-tap spatial terms, four nonlinear terms and a bias term. The 6-tap spatial terms correspond to six neighboring luma samples (i.e., L0, L1, ..., L5) around the chroma sample (i.e., C) to be predicted, the four non-linear terms are derived from the samples L0, L1, L2, and L3 as shown in FIG. 8.

$$C = \sum_{i=0}^{5} \alpha_i \cdot (L_i - \text{offsetLuma}) + \sum_{i=6}^{9} \alpha_i \cdot (((L_{i-4} - \text{offsetLuma})^2 + \beta)$$

$$\gg bitDepth) + \alpha_{10} \cdot \beta + \text{offsetChroma} \qquad (4)$$

where $\alpha_i$ is the coefficient and $\beta$ is the offset. Same to the existing CCCM design, up to six lines/columns of chroma samples above and left to the current CU (reference/template area) are applied to derive the filter coefficients. The filter coefficients are derived based on the same LDL decomposition method used in CCCM.

**Block-vector guided CCCM (BVG-CCCM)**

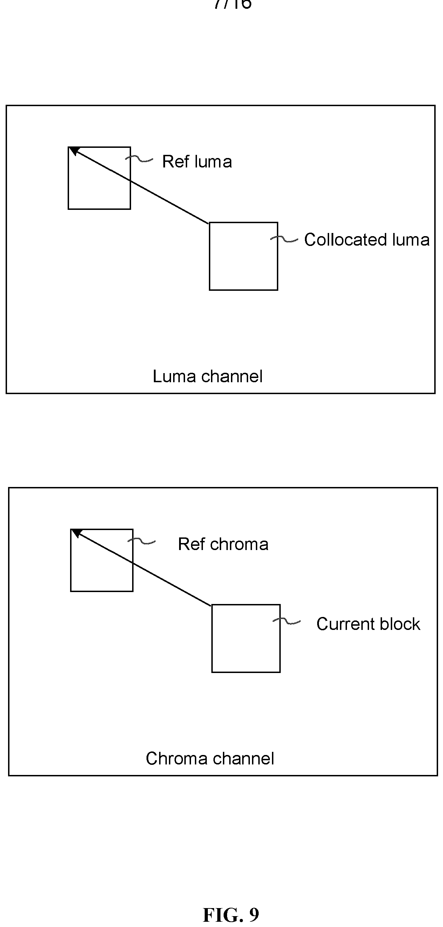

When the co-located luma prediction is coded with intra block copy mode (IBC) or IntraTMP (intra template matching) mode in Intra slices, the BVG-CCCM mode can be used. In this mode, the block vectors of the co-located luma blocks, coded in IBC or intraTMP modes, are used to determine the reference area for calculating the CCCM parameters. The prediction is performed using the calculated model parameters and co-located luma samples. FIG. 9 illustrates the reference area in BVG-CCCM method.

The BVG-CCCM mode uses an 11-tap filter for cross-component prediction as below:

$$\text{predChromaVal} = c0\ C + c1\ N + c2\ S + c3\ E + c4\ W + c5\ P(C) + c6\ P(N) + c7\ P(S) +$$

$$c8\ P(W) + c9\ P(E) + c10\ B \qquad (5)$$

The input to the spatial 5-tap component of the filter consists of a center (C) luma sample which is collocated with the chroma sample to be predicted and its above/north (N), below/south (S), left/west (W) and right/east (E) neighbors as illustrated in FIG. 6. The nonlinear term P is represented as squares of the corresponding luma sample and B is the bias term.

Similar to Direct Block Vector (DBV) mode, five locations in the collocated luma block area are scanned and the associated block vectors are then used for determining the reference area for parameter calculation in BVG-CCCM method.

**Gradient and Location based convolutional cross-component model (GL-CCCM)**

This method maps luma values into chroma values using a filter with inputs consisting of one spatial luma sample, two gradient values, two location information, a nonlinear term, and a bias term. The GL-CCCM method uses gradient and location information instead of the four spatial neighbor samples used in the CCCM filter. The GL-CCCM filter used for the prediction is:

$$\text{predChromaVal} = c0\ C + c1\ Gy + c2\ Gx + c3\ Y + c4\ X + c5\ P + c6\ B \qquad (6)$$

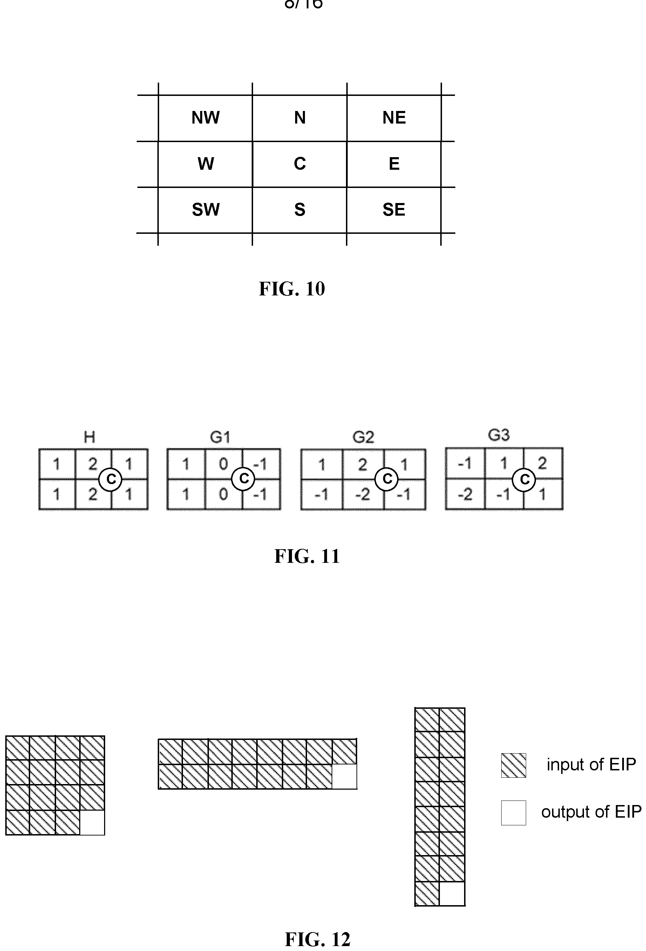

where Gy and Gx are the vertical and horizontal gradients, respectively, and are calculated as FIG. 10:

$$Gy = (2N + NW + NE) - (2S + SW + SE)$$

$$Gx = (2W + NW + SW) - (2E + NE + SE)$$

Moreover, Y and X are the spatial coordinates of the center luma sample.

The rest of the parameters are the same as the CCCM tool. The reference area for the parameter calculation is the same as the CCCM method.

The usage of the mode is signalled with a CABAC coded PU level flag. When it comes to signalling, GL-CCCM is considered as a sub-mode of CCCM. That is, the GL-CCCM flag is only signalled if the original CCCM flag is true.

Similar to the CCCM, GL-CCCM tool has six modes for calculating the parameters:

(1). Single-model GL-CCCM from above and left templates,
(2). Single-model GL-CCCM from above template,
(3). Single-model GL-CCCM from left template,

(4). Multi-model GL-CCCM from above and left templates,
(5). Multi-model GL-CCCM from above template, and
(6). Multi-model GL-CCCM from left template.

The encoder performs SATD (Sum of Absolute Transformed Differences) search for the six GL-CCCM modes along with the existing CCCM modes to find the best candidates for full RD tests.

### CCCM with Multiple Down-sampling Filters

Multiple down-sampling filters are applied to a group of reconstructed luma samples in CCCM. The linear combination of these down-sampled reconstructed samples is multiplied by derived filter coefficients to form the final chroma predictor. The horizontal or vertical location of the center luma sample are also considered in the tested model. The cross-component models shown below are tested as additional CCCM modes with a mode index signaled in the bitstream:

$$\text{Model 1: predChroma} = c0 * H(C) + c1 * G1(C) + c2 * G2(C) + c3 * G3(C) + c4 * P(H(C)) +$$

$$c5 * P(G1(C)) + c6 * P(G2(C)) + c7 * X + c8 * Y + c9 * B \quad (7a)$$

$$\text{Model 2: predChroma} = c0 * H(C) + c1 * H(W) + c2 * H(E) + c3 * G1(C) + c4 * G1(W) + c5$$

$$* G1(E) + c6 * P(H(C)) + c7 * P(H(W)) + c8 * P(H(E)) + c9 * X + c10 * B \quad (7b)$$

Model 3: predChroma = c0 * H(C) + c1 * H(NE) + c2 * H(SW) + c3 * G3(C) + c4 * G3(NE) + c5 * G3(SW) + c6 * P(H(C)) + c7 * P(H(NE)) + c8 * P(H(SW)) + c9 * Y + c10 * B $\quad (7c)$

where $H(\cdot)$, $G1(\cdot)$, $G2(\cdot)$, $G3(\cdot)$ are various down-sampling filters as illustrated in FIG. 11, C denotes the current chroma sample position, and N, S, W, E, NE, SW are the positions around C, $c_i$ are filter coefficients, P and B are nonlinear term and bias term, and X and Y are the horizontal and vertical locations of the center luma sample with respect to the top-left coordinates of the block.

### Extrapolation filter-based intra prediction (EIP)

In the EIP mode, the samples in a CU (Coding Unit) are predicted from the top-left position to the bottom-right position by applying an extrapolation filter to neighboring reconstructed samples or predicted samples. The EIP mode uses a 15-tap filter for prediction as:

$$pred_{(x,y)} = \sum_{i=0}^{14} \left( c_i \times t_{(x-offsetX_i,\, y-offsetY_i)} \right) \quad (8)$$

where $pred_{(x,y)}$ is the predicted value at position (x, y) in the CU, $c_i$ is the filter coefficient, and $t_{(x-offsetX_i, y-offsetY_i)}$ is the reconstructed samples or predicted sample.

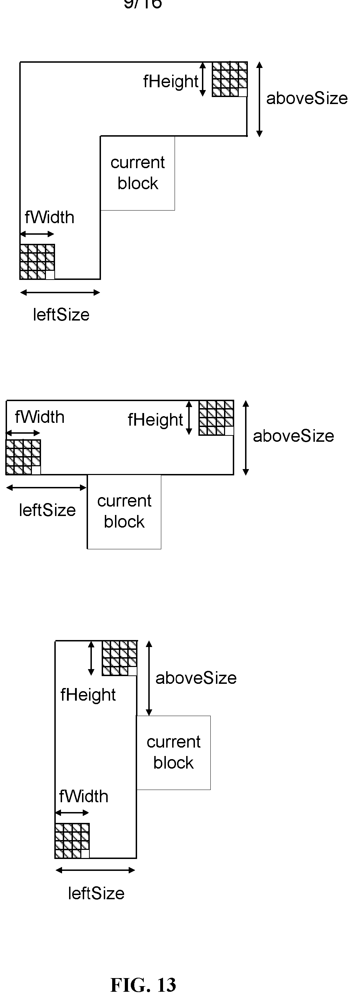

The EIP filter can be derived from the neighboring reconstructed samples or be inherited from the previous EIP coded blocks. There are three EIP filter shapes as illustrated in FIG. 12 and three types of reconstructed area supported in ECM as illustrated in FIG. 13.

For a CU coded in the EIP mode, an EIP merge flag is signaled to indicate whether the EIP filter is inherited from previous blocks coded in EIP mode. When the EIP merge flag is true, an EIP merge list is constructed from the spatial adjacent, spatial non-adjacent, temporal and history candidates. The position and inclusion order of these candidates are the same as those used in CCP merge candidate list. An EIP merge index is further signaled to indicate which EIP merge candidate is selected. The filter shape and the filter coefficients of the selected candidate are then inherited to code the CU.

When the EIP merge flag is false, the EIP filter is derived from the neighboring reconstructed samples (reference/template area) and the relevant syntax element is signaled to indicate which one of the three types of reconstructed area and which one of the three filter shapes are used for the CU. The selected filter moves in the selected reconstructed area either horizontally or vertically with a one-pixel step to construct the autocorrelation matrix and the cross-correlation vector. The calculation of filter coefficients from the autocorrelation matrix and the cross-correlation vector is the same as that in CCCM.

**Regularized EIP or CCCM**

In the field of statistical learning theory, the purpose of regularization is to enforce conditions, for example sparsity, smoothness or constraining the solution values not to be ridiculously high, that can produce stable predictive functions. For example, in the more common vector framework, Tikhonov regularization optimizes over

$$\min_{x} \|Ax - y\|^2 + \lambda.\|x\|^2$$

to find a vector x that is a stable solution to the regression problem. For a more generalized penalty on x modeled with matrix L:

$$\min_{x} \|Ax - y\|^2 + \|Lx\|^2$$

In CCCM or EIP, the model coefficients are computed as solving a system of linear equations by Gaussian elimination:

$$\mathbf{A}^\top \boldsymbol{y} = (\mathbf{A}^\top \mathbf{A})\widehat{\boldsymbol{x}} \qquad\qquad (1a)$$

With the solution to the model coefficients $\hat{x}$ being

$$\widehat{\boldsymbol{x}} = (\mathbf{A}^\top \mathbf{A})^{-1}\mathbf{A}^\top \boldsymbol{y} \qquad\qquad (1b)$$

It has been proposed in an article, by H. Qin, et al., "AHG12: Regularized EIP," document JVET-AH0095, 34th JVET Meeting: Rennes, FR, 17-24 April 2024 (hereinafter "JVET-AH0095"), to introduce L2-regularization to EIP. The model coefficients are computed as:

$$\widehat{\boldsymbol{x}} = (\mathbf{A}^\top \mathbf{A} + \lambda\mathbf{I})^{-1}\mathbf{A}^\top \boldsymbol{y} \qquad\qquad (1c)$$

where $\lambda$ is the regularization parameters. L2-regularization is achieved by a diagonal matrix being added to the 'A'A' matrix. The rest of EIP solver and prediction are kept unchanged. For EIP, the value $\lambda$ is chosen as $\lambda = p_{EIP} \times 128$, where $p_{EIP} = 15$ is the number of filter taps in EIP. For CCCM, $\lambda = n_p \times 32$ where $n_p$ is the number of parameters in the model to be computed. The first (co-located luma) and the last (bias) terms are unregularized by setting the top-left and bottom-right entries of the ridge identity matrix to zero.

In JVET-AH0095, the proposed regularization allows to favor high numerical values for the center coefficient which is not regularized, while for other coefficients, relatively smaller (than center value) values are advantaged.

In one embodiment, we propose to better tailor the regularization terms for the matrix inversion process used in the derivation of the filter parameters, in function of the filter shape, the coefficient (spatial) position and its role/type in the (chroma sample) prediction equations (see equations (2)-(8)).

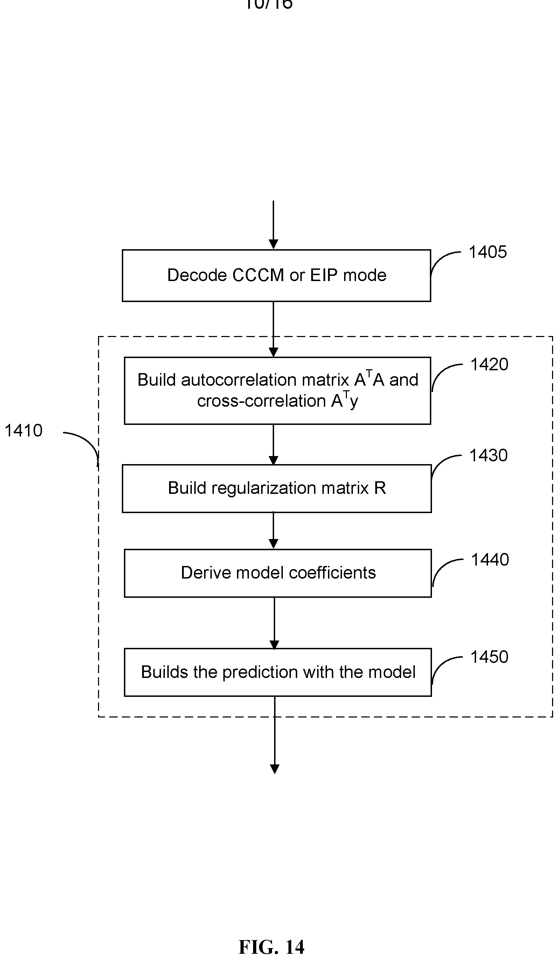

FIG. 14 illustrates the process for building the prediction for a block coded with CCCM or EIP mode, according to this embodiment. It may be applied to any other coding modes with convolutional prediction models, which derives a linear model for predicting the current block with previously reconstructed samples or data.

In particular, at step 1405, an index (e.g., syntax element) is decoded or inferred from other decoded information. This index indicates which model to use to build the prediction. At step 1420, an autocorrelation matrix M = A$^\top$A of size (nb x nb) is built from the reconstructed neighboring data (e.g., reconstructed neighboring samples of the reference template), where nb is the number of coefficients. At step 1430, a regularization matrix R is built. The coefficients of the model are derived (1440) by solving the following equation:

$$\widehat{\boldsymbol{x}} = (\mathbf{A}^\top \mathbf{A} + \boldsymbol{R})^{-1}\mathbf{A}^\top \boldsymbol{y}$$

where $A^TA$ is the autocorrelation matrix, R is the regularization matrix, $A^Ty$ is a cross-correlation vector (size nb) as explained before.

At step 1450, the model is used to build the prediction of the current component (e.g., chroma component) for the current block from the reconstructed samples of another component (e.g., luma component) of the current block.

Embodiment-1 - regularization with combined coefficients constraints

In JVET-AH0095, the regularization for CCCM and EIP uses a regularization matrix R built as a diagonal identity matrix $\lambda I$.

More precisely, for CCCM and EIP, the last coefficient (bias) is not regularized (bottom-right coefficient of R is zero). For CCCM, the center coefficient is not regularized (top-left coefficient of R is zero). All the other coefficients of the diagonal are set to $\lambda$.

$$R = \begin{pmatrix} \mathbf{0} & 0 & 0 & 0 & 0 & 0 & 0 & 0 & 0 \\ 0 & \lambda & 0 & 0 & 0 & 0 & 0 & 0 & 0 \\ 0 & 0 & \lambda & 0 & 0 & 0 & 0 & 0 & 0 \\ 0 & 0 & 0 & \lambda & 0 & 0 & 0 & 0 & 0 \\ 0 & 0 & 0 & 0 & \lambda & 0 & 0 & 0 & 0 \\ 0 & 0 & 0 & 0 & 0 & \lambda & 0 & 0 & 0 \\ 0 & 0 & 0 & 0 & 0 & 0 & \lambda & 0 & 0 \\ 0 & 0 & 0 & 0 & 0 & 0 & 0 & \lambda & 0 \\ 0 & 0 & 0 & 0 & 0 & 0 & 0 & 0 & 0 \end{pmatrix}$$

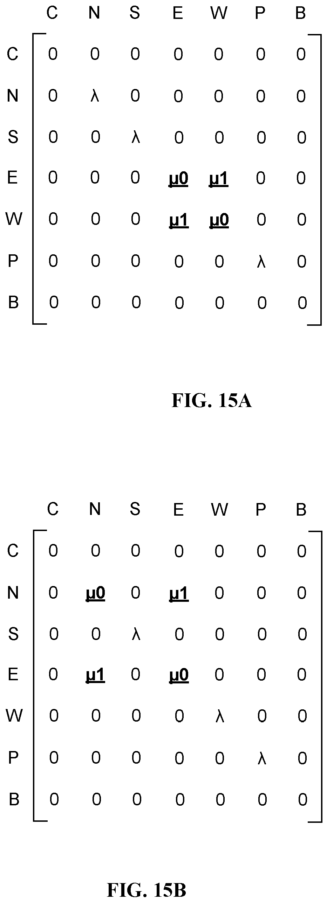

In this embodiment, symmetrical (same) values for some coefficients may be favored by adding non-zero covariance terms (not in the diagonal) in the matrix R. For example, in case of convolutional CCCM, one may favor solutions with pair of coefficients with same magnitude. For example, one may favor solutions where coefficients corresponding to E and W have similar magnitude (see FIG. 15A) or where coefficients corresponding to N and E have similar magnitude (see FIG. 15B). Following the same principle, one may set some non-diagonal coefficients of the matrix R. Note that the matrix R is symmetric by construction.

In this example(s), the values of $\mu 0$ and $\mu 1$ may be chosen so that different values for the two coefficients would increase the cost. For example, one may use following properties a), b) or c) for ($\mu 0$; $\mu 1$) values:

a)

$$\mu 0 = -\mu 1$$

b)

$$\mu 0 = (\lambda + \alpha) \text{ and } \mu 1 = -\alpha$$

c)

$$\mu 0 = \lambda \text{ and } \mu 1 = -\alpha$$

where $\alpha$ is a pre-defined constant value (e.g., $\alpha = \lambda/2$ or $\alpha = -\lambda/2$).

In a variant, the matrix R is chosen to be symmetric and positive semi-definite: i.e., there exists a matrix L such that $R = L^TL$. This imposes that coefficients on the diagonal are positive. In this case, one may store L and derive R.

Embodiment-2 - regularization weights function of the coefficient position

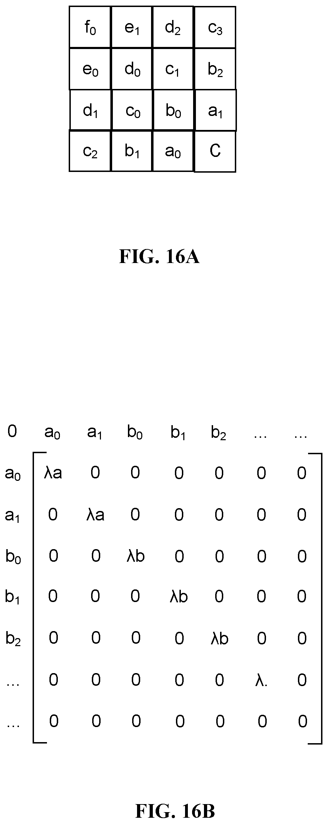

The values of the diagonal and/or non-diagonal elements of matrix R may be determined as a function of the position of the input sample relative to the center C. For example, in case of EIP, one may want to favor higher coefficient values for the samples close to C (e.g., $a_i$, $b_i$ coefficients in FIG. 16A). For example, in the example depicted in FIG. 16B, one may choose weighting value $\lambda b$ that is positive and greater than $\lambda a$ to favor solutions where values of (a0, a1) are greater than values of (b0, b1, b2). In a variant, the weighting value $\lambda$ may be a function of the distance of the sample coefficient to the center.

Embodiments 1 and 2 may be combined. For example, one may have different non-zero weighting values in the diagonal of matrix R and non-zero non-diagonal elements in the matrix R. The values of the (diagonal and/or non-diagonal) elements in the matrix R may be different and function of the position of the sample coefficient filter relative to the center.

Embodiment-3 - regularization weights function of the coefficient type

There are several types of convolutional model coding tools using different types of inputs. For example:

- Reconstructed luma samples (e.g., C, N, S, W, E of convolutional filter, L of GLM)
- Reconstructed luma samples but not the center C (e.g., N, S, W, E of convolutional filter)
- Non-linear term (e.g., P of convolutional filter)
- Bias (e.g., midValB of convolutional filter)
- Gradient value (e.g., G of GLM, Gx/Gy of GL-CCCM)

In this embodiment, the (diagonal or non-diagonal) elements of the matrix R of one input type may all have the same value. The value of the (diagonal or non-diagonal) elements of the matrix R is function of the input type.

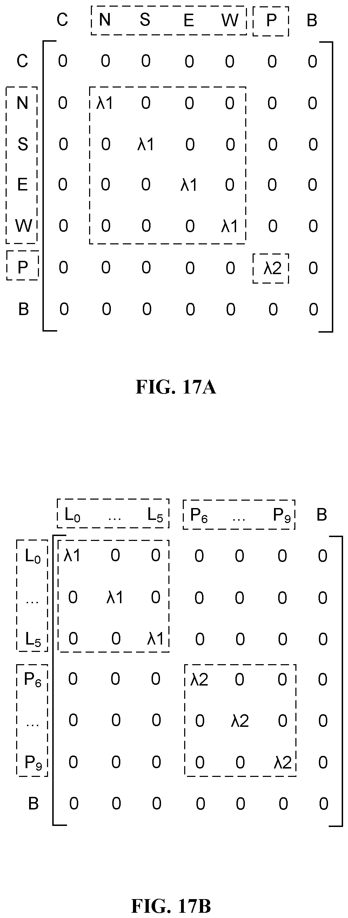

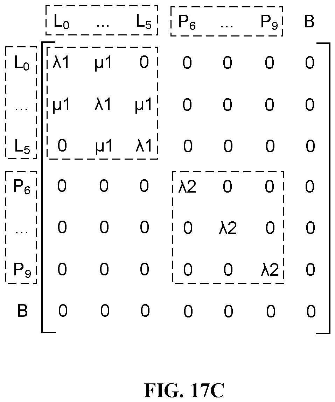

In example depicted in FIG.17A for matrix R associated with convolutional filter, all the coefficients of the input type "Reconstructed luma samples but not the center C" share the same diagonal value $\lambda 1$. In another example depicted in FIG. 17B for matrix R associated with CCCM using non-down-sampled luma samples, all the coefficients of the input type "Reconstructed luma samples" and "Non-linear term" share the same diagonal value, $\lambda 1$ and $\lambda 2$, respectively. In another example depicted in FIG. 17C for matrix R associated with CCCM using non-down-sampled luma samples, all the coefficients of the input type "Reconstructed luma samples" share the same diagonal value $\lambda 1$ and non-diagonal value $\mu 1$.

Embodiment-4 - coefficients of the regularization matrix function of other coding parameters

The values of the coefficients of the regularization matrix may be a function of some other coding parameters and/or current block parameters, for example, the current block size, the template size. The larger the template size is, the smaller the value of $\lambda_k$ (or $\mu_k$, etc...) in general.

Embodiment-5 - generalization to other modes using convolution filter

The previous embodiments may be applied to any coding mode using a convolution filter to build the prediction, where the inputs of the convolution filter may have different types, or may use different coefficients positions or different inputs of same type with same nature such as IntraTMP or IBC coding modes for example.

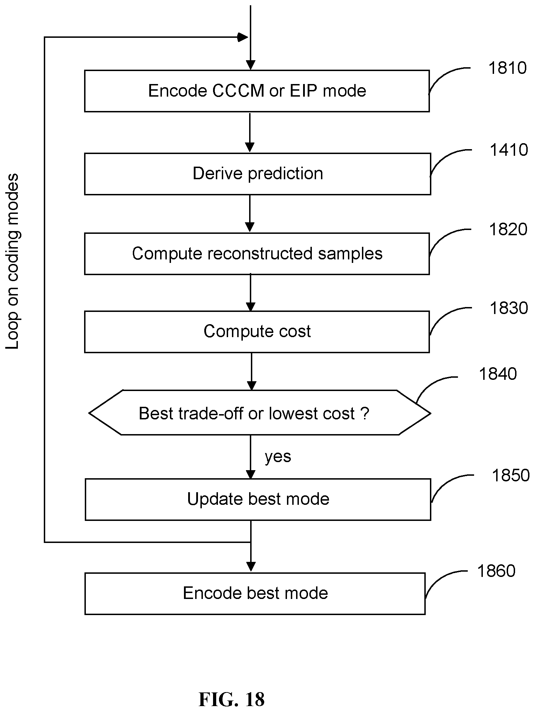

FIG. 18 illustrates a process for building prediction with a CCCM or EIP mode at the encoder, according to an embodiment. At step 1810, a syntax element (flag or index) indicating which convolutional mode (e.g., CCCM, EIP, BVG-CCCM...) is tested is encoded (or the coding cost "bcost" of the syntax element is estimated). The prediction is derived (1410), as the prediction used in FIG. 14, according to this CCCM or EIP mode. At step 1820, the samples of the current block are reconstructed using the prediction plus the residuals. The overall cost of this coding mode is generally estimated as cost = distortion + $\lambda$.bcost (1830) where $\lambda$ is a Lagrangian factor, generally a function of the quantization parameter. If the current coding mode has a cost smaller than the current minimum cost (1840), the minimum cost and the best mode are updated (1850) to the current cost and the current mode, respectively. After the coding modes are all tested, the best mode is selected and encoded (1860). The block is encoded with this selected best mode.

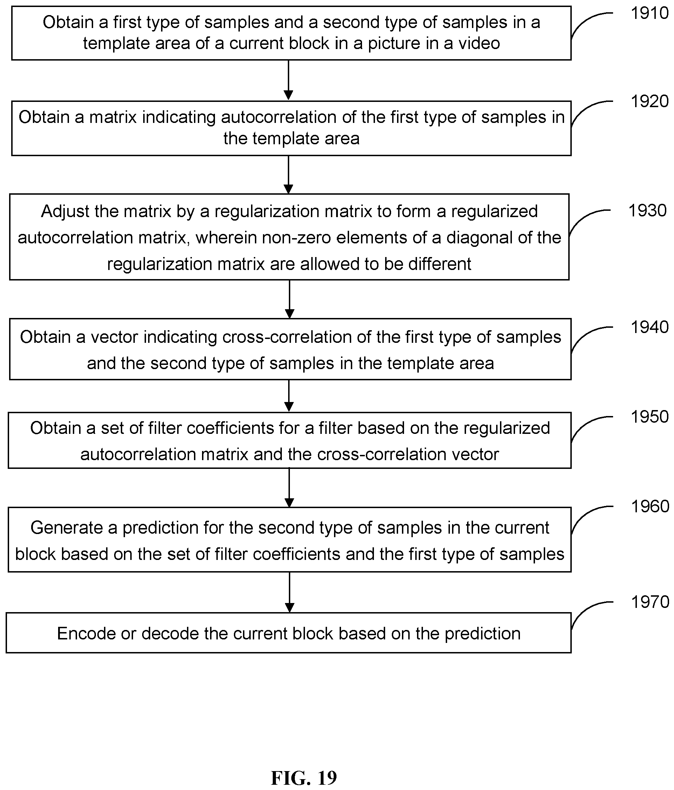

In the above, we use CCCM and EIP as examples to describe our proposed methods. More generally, the proposed methods may be applied to any other coding modes with convolutional prediction models, which derives a linear model for predicting the current block with previously reconstructed samples or data. FIG. 19 illustrates an encoding or decoding method that employs the regularization to obtain the model parameters, according to this embodiment.

In particular, the encoder or decoder first obtains (1910) a first type of samples and a second type of samples in a template area of a current block in a picture in a video. For CCCM, the first and second types of samples can be the luma and chroma samples, respectively. For EIP, the first and second types of samples can be the input and output to the EIP filter, respectively.

From the first type of samples, the encoder or decoder obtains (1920) a first matrix indicating autocorrelation of the first type of samples in the template area. The first matrix is adjusted (1930) by a regularization matrix to form a regularized autocorrelation matrix, for example, as illustrated in FIGs. 15-17, wherein non-zero elements of a diagonal of the regularization matrix are allowed to be different.

From the first type and the second type of samples, the encoder or decoder obtains (1940) a vector indicating cross-correlation of the first type of samples and the second type of samples in the template area.

Based on the regularized autocorrelation matrix and the cross-correlation vector, the encoder or decoder obtains (1950) a set of filter coefficients for a filter. Then the encoder or decoder generates (1960) a prediction for a second type of samples in the current block based on the set of filter coefficients and a first type of samples. Subsequently, the encoder or decoder can encode or decode (1970) the current block based on the prediction.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the intra prediction modules (260, 360), of a video encoder 200 and decoder 300 as shown in FIG. 2 and FIG. 3. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of video decoding, comprising:

   obtaining a first type of samples and a second type of samples in a template area of a current block in a picture in a video;
   obtaining a matrix indicating autocorrelation of the first type of samples in the template area;
   adjusting the matrix by a regularization matrix to form a regularized autocorrelation matrix, wherein non-zero elements of a diagonal of the regularization matrix are allowed to be different;
   obtaining a vector indicating cross-correlation of the first type of samples and the second type of samples in the template area;
   obtaining a set of filter coefficients for a filter based on the regularized autocorrelation matrix and the vector;
   generating a prediction for the second type of samples in the current block based on the set of filter coefficients and the first type of samples; and
   decoding the current block based on the prediction.

2. A method of video encoding, comprising:

   obtaining a first type of samples and a second type of samples in a template area of a current block in a picture in a video;
   obtaining a matrix indicating autocorrelation of the first type of samples in the template area;
   adjusting the matrix by a regularization matrix to form a regularized autocorrelation matrix, wherein non-zero elements of a diagonal of the regularization matrix are allowed to be different;
   obtaining a vector indicating cross-correlation of the first type of samples and the second type of samples in the template area;
   obtaining a set of filter coefficients for a filter based on the regularized autocorrelation matrix and the vector;
   generating a prediction for a second type of samples in the current block based on the set of filter coefficients and a first type of samples; and
   encoding the current block based on the prediction.

3. An apparatus for video decoding, comprising one or more processors and at least one memory coupled to the one or more processors, wherein the one or more processors are configured to:

obtain a first type of samples and a second type of samples in a template area of a current block in a picture in a video;

obtain a matrix indicating autocorrelation of the first type of samples in the template area;

adjust the matrix by a regularization matrix to form a regularized autocorrelation matrix, wherein non-zero elements of a diagonal of the regularization matrix are allowed to be different;

obtain a vector indicating cross-correlation of the first type of samples and the second type of samples in the template area;

obtain a set of filter coefficients for a filter based on the regularized autocorrelation matrix and the vector;

generate a prediction for a second type of samples in the current block based on the set of filter coefficients and a first type of samples; and

decode the current block based on the prediction.

4. An apparatus for video encoding, comprising one or more processors and at least one memory coupled to the one or more processors, wherein the one or more processors are configured to:

obtain a first type of samples and a second type of samples in a template area of a current block in a picture in a video;

obtain a matrix indicating autocorrelation of the first type of samples in the template area;

adjust the matrix by a regularization matrix to form a regularized autocorrelation matrix, wherein non-zero elements of a diagonal of the regularization matrix are allowed to be different;

obtain a vector indicating cross-correlation of the first type of samples and the second type of samples in the template area;

obtain a set of filter coefficients for a filter based on the regularized autocorrelation matrix and the vector;

generate a prediction for a second type of samples in the current block based on the set of filter coefficients and a first type of samples; and

encode the current block based on the prediction.

5. The method of claim 1 or 2, or the apparatus of claim 3 or 4, wherein the regularization matrix contains non-zero non-diagonal elements.

6. The method of claim 1, 2 or 5, or the apparatus of any one of claims 3-5, wherein the regularization matrix is symmetric and positive semi-definite.

7. The method of any one of claims 1, 2, 5 and 6, or the apparatus of any one of claims 3-6, wherein a value of an element in the regularization matrix depends on a distance of a position of an input sample corresponding to the element to a center position.

8. The method of claim 7, or the apparatus of claim 7, wherein a larger value is used for the element in the regularization matrix for a smaller distance to the center position.

9. The method of any one of claims 1, 2 and 5-8, or the apparatus of any one of claims 3-8, wherein a value of an element in the regularization matrix depends on a type of a corresponding sample.

10. The method of claim 9, or the apparatus of claim 9, wherein the type includes one or more of reconstructed luma samples, reconstructed luma samples but not center, gradient values, non-linear term, and bias.

11. The method of any one of claims 1, 2 and 5-10, or the apparatus of any one of claims 3-10, wherein a value of an element in the regularization matrix depends on at least one of a block size of the current block and a size of the template area.

12. The method of claim 11, or the apparatus of claim 11, wherein a smaller value is used for the element in the regularization matrix for a larger size of the template area.

13. The method of any one of claims 1, 2 and 5-12, or the apparatus of any one of claims 3-12, wherein the filter is a convolutional filter.

14. The method of any one of claims 1, 2 and 5-13, or the apparatus of any one of claims 3-13, wherein the prediction is generated based on a convolutional cross-component model, wherein the first type of samples corresponds to a luma component and the second type of samples corresponds to a chroma component.

15. The method of any one of claims 1, 2 and 5-13, or the apparatus of any one of claims 3-13, wherein the prediction is generated based on extrapolation filter-based intra prediction, wherein the first type of samples corresponds to samples used as input to an extrapolation filter and the second type of samples corresponds to samples output from the extrapolation filter.

**FIG. 1**

FIG. 2

300

330 Entropy Decoding → 335 Partitioning → 340 Inverse Quantization → 350 Inverse Transform

355 ⊕

370

360 Intra Prediction

375 Motion Compensation

380 Reference Picture Buffer

365 In-loop Filters → 385 Post-decoding processing

**FIG. 3**

705

**Reference area**

PU

▨ : additional line/column attached
to the reference area

▨ : reference area

**FIG. 4**

**Reconstructed Y samples**

**Reconstructed Chroma samples**

recY[3][k]

recY[2][k]

recY[0][k]

recY[1][k]

recY[4][k]

recC[k]

**FIG. 5**

**FIG. 6**

**FIG. 7**

**FIG. 8**

1716

Ref luma

Collocated luma

Luma channel

Ref chroma

Current block

Chroma channel

**FIG. 9**

| NW | N | NE |
|----|---|----|
| W | C | E |
| SW | S | SE |

**FIG. 10**

H
| 1 | 2 | 1 |
|---|---|---|
| 1 | 2 | 1 |

G1
| 1 | 0 | -1 |
|---|---|----|
| 1 | 0 | -1 |

G2
| 1 | 2 | 1 |
|---|---|---|
| -1 | -2 | -1 |

G3
| -1 | 1 | 2 |
|----|---|---|
| -2 | -1 | 1 |

**FIG. 11**

input of EIP

output of EIP

**FIG. 12**

FIG. 13

```
                    ↓
┌──────────────────────────────┐   ┌─ 1405
│   Decode CCCM or EIP mode     │
└──────────────────────────────┘
                    ↓
┌ ─ ─ ─ ─ ─ ─ ─ ─ ─ ─ ─ ─ ─ ─ ─ ─ ─ ─ ─ ─ ─ ┐
        ↓
│ ┌──────────────────────────────┐   ┌─ 1420 │
  │ Build autocorrelation matrix │
│ │      AᵀA and                 │          │
  │   cross-correlation Aᵀy      │
│ └──────────────────────────────┘          │
1410            ↓
│ ┌──────────────────────────────┐   ┌─ 1430 │
  │  Build regularization matrix R │
│ └──────────────────────────────┘          │
                    ↓
│ ┌──────────────────────────────┐   ┌─ 1440 │
  │   Derive model coefficients  │
│ └──────────────────────────────┘          │
                    ↓
│ ┌──────────────────────────────┐   ┌─ 1450 │
  │ Builds the prediction with the model │
│ └──────────────────────────────┘          │
        ↓
└ ─ ─ ─ ─ ─ ─ ─ ─ ─ ─ ─ ─ ─ ─ ─ ─ ─ ─ ─ ─ ─ ┘
                    ↓
```

**FIG. 14**

|   | C | N | S | E | W | P | B |
|---|---|---|---|---|---|---|---|
| C | 0 | 0 | 0 | 0 | 0 | 0 | 0 |
| N | 0 | $\lambda$ | 0 | 0 | 0 | 0 | 0 |
| S | 0 | 0 | $\lambda$ | 0 | 0 | 0 | 0 |
| E | 0 | 0 | 0 | $\underline{\mu 0}$ | $\underline{\mu 1}$ | 0 | 0 |
| W | 0 | 0 | 0 | $\underline{\mu 1}$ | $\underline{\mu 0}$ | 0 | 0 |
| P | 0 | 0 | 0 | 0 | 0 | $\lambda$ | 0 |
| B | 0 | 0 | 0 | 0 | 0 | 0 | 0 |

**FIG. 15A**

|   | C | N | S | E | W | P | B |
|---|---|---|---|---|---|---|---|
| C | 0 | 0 | 0 | 0 | 0 | 0 | 0 |
| N | 0 | $\underline{\mu 0}$ | 0 | $\underline{\mu 1}$ | 0 | 0 | 0 |
| S | 0 | 0 | $\lambda$ | 0 | 0 | 0 | 0 |
| E | 0 | $\underline{\mu 1}$ | 0 | $\underline{\mu 0}$ | 0 | 0 | 0 |
| W | 0 | 0 | 0 | 0 | $\lambda$ | 0 | 0 |
| P | 0 | 0 | 0 | 0 | 0 | $\lambda$ | 0 |
| B | 0 | 0 | 0 | 0 | 0 | 0 | 0 |

**FIG. 15B**

| $f_0$ | $e_1$ | $d_2$ | $c_3$ |
|-------|-------|-------|-------|
| $e_0$ | $d_0$ | $c_1$ | $b_2$ |
| $d_1$ | $c_0$ | $b_0$ | $a_1$ |
| $c_2$ | $b_1$ | $a_0$ | $C$ |

**FIG. 16A**

| 0 | $a_0$ | $a_1$ | $b_0$ | $b_1$ | $b_2$ | ... | ... |
|-------|-------|-------|-------|-------|-------|-------|-------|
| $a_0$ | $\lambda a$ | 0 | 0 | 0 | 0 | 0 | 0 |
| $a_1$ | 0 | $\lambda a$ | 0 | 0 | 0 | 0 | 0 |
| $b_0$ | 0 | 0 | $\lambda b$ | 0 | 0 | 0 | 0 |
| $b_1$ | 0 | 0 | 0 | $\lambda b$ | 0 | 0 | 0 |
| $b_2$ | 0 | 0 | 0 | 0 | $\lambda b$ | 0 | 0 |
| ... | 0 | 0 | 0 | 0 | 0 | $\lambda.$ | 0 |
| ... | 0 | 0 | 0 | 0 | 0 | 0 | 0 |

**FIG. 16B**

**FIG. 17A**

**FIG. 17B**

**FIG. 17C**

FIG. 18

Obtain a first type of samples and a second type of samples in a template area of a current block in a picture in a video — 1910

Obtain a matrix indicating autocorrelation of the first type of samples in the template area — 1920

Adjust the matrix by a regularization matrix to form a regularized autocorrelation matrix, wherein non-zero elements of a diagonal of the regularization matrix are allowed to be different — 1930

Obtain a vector indicating cross-correlation of the first type of samples and the second type of samples in the template area — 1940

Obtain a set of filter coefficients for a filter based on the regularized autocorrelation matrix and the cross-correlation vector — 1950

Generate a prediction for the second type of samples in the current block based on the set of filter coefficients and the first type of samples — 1960

Encode or decode the current block based on the prediction — 1970

**FIG. 19**

## EUROPEAN SEARCH REPORT

**Application Number**

EP 24 30 6084

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/126889 A1 (NOKIA TECHNOLOGIES OY [FI]) 20 June 2024 (2024-06-20) | 1-6,13, 14 | INV.<br>H04N19/117 |
| Y | * paragraph [0001] - paragraph [0110] * | 15 | H04N19/176 |
| A | * figures 1-4 * | 7-12 | H04N19/593<br>H04N19/82 |
| | ----- | | |
| E | WO 2024/149384 A1 (MEDIATEK INC [CN]) 18 July 2024 (2024-07-18)<br>* paragraph [0001] - paragraph [0318] *<br>* figures 1-33 * | 1 | |
| | ----- | | |
| Y | HONGDONG QIN (TCL) ET AL: "AHG12: Regularized EIP",<br>34. JVET MEETING; 20240417 - 20240424; RENNES; (THE JOINT VIDEO EXPLORATION TEAM OF ISO/IEC JTC1/SC29/WG11 AND ITU-T SG.16 ),<br>,<br>no. JVET-AH0095<br>10 April 2024 (2024-04-10), XP030317361,<br>Retrieved from the Internet:<br>URL:https://jvet-experts.org/doc_end_user/documents/34_Rennes/wg11/JVET-AH0095-v1.zip JVET-AH0095-v1.docx<br>[retrieved on 2024-04-10]<br>* page 1 - page 4 * | 15 | |
| | ----- | | |

**TECHNICAL FIELDS SEARCHED (IPC)**

H04N

The present search report has been drawn up for all claims

| Place of search | Date of completion of the search | Examiner |
|---|---|---|
| Munich | 11 December 2024 | Ernst, Jens |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

## ANNEX TO THE EUROPEAN SEARCH REPORT
## ON EUROPEAN PATENT APPLICATION NO.

EP 24 30 6084

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | Publication date |
|---|---|---|---|
| WO 2024126889 A1 | 20-06-2024 | NONE | |
| WO 2024149384 A1 | 18-07-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. QIN et al.** AHG12: Regularized EIP. *JVET-AH0095, 34th JVET Meeting: Rennes, FR*, 17 April 2024